Europäisches Patentamt

European Patent Office

Office européen des brevets

(19)

(11) Veröffentlichungsnummer : **0 090 995**
**B1**

(12) EUROPÄISCHE PATENTSCHRIFT

(45) Veröffentlichungstag der Patentschrift :
**15.05.85**

(51) Int. Cl.⁴ : **A 23 K   1/175**

(21) Anmeldenummer : **83102761.0**

(22) Anmeldetag : **21.03.83**

(54) Verfahren zur Herstellung eines granulierten Futtermittel-Phosphates.

(30) Priorität : **02.04.82 DE 3212325**

(43) Veröffentlichungstag der Anmeldung :
**12.10.83 Patentblatt 83/41**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
DE-A- 1 692 434
DE-B- 2 110 759
DE-C- 1 817 127

(73) Patentinhaber : **HOECHST AKTIENGESELLSCHAFT**
**Postfach 80 03 20**
**D-6230 Frankfurt am Main 80 (DE)**

(72) Erfinder : **Cremer, Josef, Dr.**
**Karl-Schurz-Strasse 6**
**D-5030 Hürth (DE)**
Erfinder : **Haas, Hans, Dr.**
**Bünnagelring 17**
**D-5351 Swisttal (DE)**
Erfinder : **Schulte, Friedrich, Dr.**
**An den Kiefern 6**
**D-5353 Mechernich (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die vorliegende Patentanmeldung betrifft ein Verfahren zur Herstellung eines granulierten, aus den Phosphaten des Natriums, Magnesiums und Calciums bestehenden Futtermittel-Phosphates durch Eintragen von Phosphorsäure, Dolomit und ·Natronlauge in eine langgestreckte Reaktionszone, wobei man den Dolomit mit einer Korngröße kleiner als 0,1 mm und die Phosphorsäure am Anfang der Reaktionszone in diese einträgt, und wobei man an einem Punkt der Reaktionszone, welchen die Mischung aus Dolomit und Phosphorsäure nach 0,5 bis 3 Minuten erreicht, dieser Mischung die Natronlauge zusetzt, und wobei man den Dolomit, die Phosphorsäure und die Natronlauge unter ständigem Durchmischen durch die Reaktionszone hindurchbewegt und reagieren läßt.

Aus der DE-C-1 226 994 ist ein Verfahren zur Herstellung eines aus Natrium-, Magnesium- und gegebenenfalls Calcium-orthophosphat bestehenden Salzgemisches bekannt, wobei man Orthophosphorsäure, Natronlauge, Magnesiumoxid und gegebenenfalls Calciumoxid während eines 10 bis 45 Minuten dauernden ständigen Mischens über eine Mischstrecke fortbewegt. Magnesiumoxid und gegebenenfalls Calciumoxid, welche eine Korngröße von weniger als 0,1 mm aufweisen, werden dabei zusammen mit der Orthophosphorsäure am Anfang der Mischstrecke und die Natronlauge kurz dahinter aufgegeben. Schließlich wird das erhaltene Salzgemisch einer Mahltrocknung unterworfen.

Beim Verfahren zur Herstellung eines Tierfuttermittels nach der DE-C-1 817 127 trägt man Dolomit und Phosphorsäure, welche eine Konzentration von 10 bis 50 Gewichtsprozent aufweist, am Anfang einer langgestreckten Reaktionszone ein, während man die Natronlauge mit einer Konzentration von etwa 50 Gewichtsprozent an einem Punkt der Reaktionszone zusetzt, welche die Mischung aus Dolomit und Phosphorsäure nach 0,5 bis 3 Minuten erreicht. Aus dem leicht krümeligen Produkt werden die Agglomerate, welche größer als 3 mm sind, entnommen, zerkleinert und wieder zugesetzt. Dann läßt man das krümelige Produkt bei mindestens 60 % Luftfeuchte und erhöhter Temperatur unter ständiger Bewegung garen. Schließlich wird das Produkt einer Mahltrocknung unterworfen und der Feinanteil kleiner als 40 μ weitgehend entfernt.

Nachteilig ist bei den bekannten Verfahren, daß sie das Endprodukt in Form eines Pulvers liefern. Einerseits ist dadurch eine Staubbelästigung gegeben, während andererseits die fortschreitende Verwendung von Fütterungsautomaten Futtermittelphosphate in Form stabiler Granalien erfordert. Es läßt sich zwar, wenn auf die Mahltrocknung zugunsten einer einfachen Trocknung verzichtet wird, beim zuletzt genannten Verfahren aus dem getrockneten Produkt ein Granulat der Korngröße 0,5 bis 2,5 mm absieben. Jedoch ist einerseits der Anteil des Granulates mit weniger als 25 % gering, während andererseits die Granalien wegen ihrer porösen Struktur nicht die erforderlichen Festigkeitswerte aufweisen.

Es ist daher Aufgabe der vorliegenden Erfindung, ein Verfahren zur Herstellung eines aus den Phosphaten des Natriums, Magnesiums und Calciums bestehenden Futtermittel-Phosphates durch Eintragen von Phosphorsäure, Dolomit und Natronlauge in eine langgestreckte Reaktionszone anzugeben, wobei ein großer Mengenanteil des Futtermittel-Phosphates in Form von abriebfesten Granalien anfällt. Das wird erfindungsgemäß dadurch erreicht, daß

a) die Phosphorsäure eine Konzentration von 50 bis 70 Gewichts% $P_2O_5$ und die Natronlauge eine Konzentration von 50 bis 80 Gewichts% NaOH aufweist,

b) die Phosphorsäure mit einer Temperatur von 50 bis 120 °C und die Natronlauge mit einer Temperatur von 60 bis 140 °C in die Reaktionszone eingetragen wird,

c) die Natronlauge über eine Strecke von höchstens 5 % der Länge der Reaktionszone der Mischung aus Dolomit und Phosphorsäure zugesetzt wird und

d) man Granalien mit einer Korngröße von 0,5 bis 2,5 mm absiebt.

Das Verfahren gemäß der Erfindung kann weiterhin wahlweise auch noch dadurch ausgestaltet sein, daß

e) die Phosphorsäure bis zu 60 Gewichts% $P_2O_5$ aufweist;

f) die Natronlauge eine Konzentration von 55 bis 75 Gewichts% NaOH aufweist;

g) die Phosphorsäure mit einer Temperatur von 70 bis 90 °C eingetragen wird;

h) die Natronlauge mit einer Temperatur von 80 bis 100 °C eingetragen wird;

i) die Natronlauge über eine Strecke von 2 bis 4 % der Länge der Reaktionszone zugesetzt wird.

Das nach dem erfindungsgemäßen Verfahren hergestellte Futtermittel-Phosphat, welches aus der langgestreckten Reaktionszone ohne weitere Trocknung entnommen wird, entspricht in seiner analytischen Zusammensetzung einschließlich des Wassergehaltes dem Endprodukt nach dem Verfahren gemäß der DE-PS-1 817 127, welches eine Trocknungsstufe durchlaufen hat.

Mit dem Verfahren gemäß der Erfindung wird ein Futtermittel-Phosphat erhalten, welches zu 50 bis 70 % aus Granalien mit einer Korngröße von 0,5 bis 2,5 mm besteht. Die Granalien sind abriebfest und lagerstabil.

Das beim erfindungsgemäßen Verfahren anfallende Über- und Unterkorn wird gemahlen und als Pulver einer Verwendung zugeführt.

Beim Verfahren gemäß der Erfindung werden zwei Prozeßschritte eingespart, nämlich die Garung und die Trocknung.

In den folgenden Beispielen wird die Abriebfestigkeit der Granalien wie folgt bestimmt :

30 g Granalien mit Korngrößen von 0,5 bis 2,5 mm werden in einer exzentrisch bewegten Porzellan-Kugelmühle mit einem Volumen von 350 ml unter Verwendung von zwei Vollgummi-Kugeln (30 mm Ø) behandelt, wobei die Kugelmühle entweder 5 oder 15 Minuten in Bewegung gehalten wird. Anschließend wird mit einem Sieb der Maschenweite 0,5 mm der Feinkornanteil (< 0,5 mm) abgetrennt und der auf dem Sieb verbleibende Granalienanteil gewogen.

Beispiel 1 (Stand der Technik)

Am Anfang der Reaktionszone eines Doppelwellengranulators werden 16,1 Gewichtsteile pro Stunde weichgebrannter Dolomit (CaO : ~ 54 %, MgO : ~ 36 %) und 141,8 Gewichtsteile pro Stunde Phosphorsäure (19,6 % $P_2O_5$ ; Temperatur : 45 °C) aufgegeben. Nach einer Reaktionszeit von 30 Sekunden erfolgt die Zugabe von 29,1 Gewichtsteilen pro Stunde Natronlauge (49 % Na/H ; Temperatur : 30 °C) über eine Strecke von 15 % der Länge der Reaktionszone. Nach Trocknung des Reaktionsproduktes wird der Körnungsbereich 0,5 bis 2,5 mm abgesiebt, wobei 23 % Granalien anfallen.

Bei der Bestimmung der Abriebfestigkeit dieser Granalien resultieren nach einem Betrieb der Kugelmühle von 5 Minuten 76 % und von 15 Minuten 65 % abriebfeste Granalien.

Beispiel 2 (gemäß der Erfindung)

Am Anfang der Reaktionszone eines Doppelwellengranulators werden 16,1 Gewichtsteile pro Stunde weichgebrannter Dolomit (CaO : ~ 54 %, MgO : ~ 36 %) und 53,4 Gewichtsteile pro Stunde Phosphorsäure (52 % $P_2O_5$ ; Temperatur : 80 °C) aufgegeben. Nach einer Reaktionszeit von 30 Sekunden erfolgt die Zugabe von 22,2 Gewichtsteilen pro Stunde Natronlauge (65 % NaOH ; Temperatur : 90 °C) über eine Strecke von 3 % der Länge der Reaktionszone. Aus dem Reaktionsprodukt wird der Körnungsbereich 0,5 bis 2,5 mm abgesiebt, wobei 62 % Granalien anfallen.

Bei der Bestimmung der Abriebfestigkeit dieser Granalien resultieren nach einem Betrieb der Kugelmühle von 5 Minuten 98 % und von 15 Minuten 97 % abriebfeste Granalien.

Beispiel 3 (gemäß der Erfindung)

Am Anfang der Reaktionszone eines Doppelwellengranulators werden 16,1 Gewichtsteile pro Stunde weichgebrannter Dolomit (CaO : ~ 54 %, MgO : ~ 36 %) und 47,1 Gewichtsteile pro Stunde Phosphorsäure (59 % $P_2O_5$ ; Temperatur : 92 °C) aufgegeben. Nach einer Reaktionszeit von 30 Sekunden erfolgt die Zugabe von 24,1 Gewichtsteilen pro Stunde Natronlauge (60 % NaOH ; Temperatur : 79 °C) über eine Strecke von 2 % der Länge der Reaktionszone. Aus dem Reaktionsprodukt wird der Körnungsbereich 0,5 bis 2,5 mm abgesiebt, wobei 58 % Granalien anfallen.

Bei der Bestimmung der Abriebfestigkeit dieser Granalien resultieren nach einem Betrieb der Kugelmühle von 5 Minuten 97 % und von 15 Minuten 95 % abriebfeste Granalien.

**Patentansprüche**

1. Verfahren zur Herstellung eines granulierten, aus den Phosphaten des Natriums, Magnesiums und Calciums bestehenden Futtermittel-Phosphates durch Eintragen von Phosphorsäure, Dolomit und Natronlauge in eine langgestreckte Reaktionszone, wobei man den Dolomit mit einer Korngröße kleiner als 0,1 mm und die Phosphorsäure am Anfang der Reaktionszone, in diese einträgt, und wobei man an einem Punkt der Reaktionszone, welchen die Mischung aus Dolomit und Phosphorsäure nach 0,5 bis 3 Minuten erreicht, dieser Mischung die Natronlauge zusetzt, und wobei man den Dolomit, die Phosphorsäure und die Natronlauge unter ständigem Durchmischen durch die Reaktionszone hindurchbewegt und reagieren läßt, dadurch gekennzeichnet, daß

a) die Phosphorsäure eine Konzentration von 50 bis 70 Gewichts% $P_2O_5$ und die Natronlauge eine Konzentration von 50 bis 80 Gewichts% NaOH aufweist,

b) die Phosphorsäure mit einer Temperatur von 50 bis 120 °C und die Natronlauge mit einer Temperatur von 60 bis 140 °C in die Reaktionszone eingetragen wird,

c) die Natronlauge über eine Strecke von höchstens 5 % der Länge der Reaktionszone der Mischung aus Dolomit und Phosphorsäure zugesetzt wird und

d) man Granalien mit einer Korngröße von 0,5 bis 2,5 mm absiebt.

2. Verfahren nach Anspruch 1, dadurch gekennzeichnet, daß die Phosphorsäure bis zu 60 Gewichts% $P_2O_5$ aufweist.

3. Verfahren nach Anspruch 1 oder 2, dadurch gekennzeichnet, daß die Natronlauge eine Konzentration von 55 bis 75 Gewichts% NaOH aufweist.

4. Verfahren nach einem der Ansprüche 1 bis 3, dadurch gekennzeichnet, daß die Phosphorsäure mit einer Temperatur von 70 bis 90 °C eingetragen wird.

5. Verfahren nach einem der Ansprüche 1 bis 4, dadurch gekennzeichnet, daß die Natronlauge mit einer Temperatur von 80 bis 100 °C eingetragen wird.

6. Verfahren nach einem der Ansprüche 1 bis 5, dadurch gekennzeichnet, daß die Natronlauge über eine Strecke von 2 bis 4 % der Länge der Reaktionszone zugesetzt wird.

## Claims

1. Process for making a granulated animal feed phosphate consisting of the phosphates of sodium, magnesium and calcium by introducing phosphoric acid, dolomite and sodium hydroxide solution into an elongated reaction zone, wherein the dolomite consisting of particles with a size of less than 0.1 mm and phosphoric acid are introduced into the head portion of the reaction zone and sodium hydroxide solution is added to said mixture at a point in the reaction zone the mixture of dolomite and phosphoric acid reaches after 0.5-3 minutes, and wherein the dolomite, phosphoric acid and sodium hydroxide solution are passed through the reaction zone with continuous agitation, and reacted, characterized in that

a) the phosphoric acid presents a concentration of 50 to 70 weight % $P_2O_5$ and the sodium hydroxide solution presents a concentration of 50 to 80 weight % NaOH,

b) the phosphoric acid is introduced into the reaction zone at a temperature of 50 to 120 °C and the sodium hydroxide solution is introduced there into at a temperature of 60 to 140 °C,

c) the sodium hydroxide solution is added to the mixture of dolomite and phosphoric acid along a path of at most 5 % the length of the reaction zone, and

d) granules with a particle size of 0.5 to 2.5 mm are sieved off.

2. Process as claimed in claim 1, wherein the phosphoric acid contains up to 60 weight % $P_2O_5$.

3. Process as claimed in claim 1 or 2, wherein the sodium hydroxide solution presents a concentration of 55 to 75 weight % NaOH.

4. Process as claimed in any of claims 1 to 3, wherein the phosphoric acid is introduced at a temperature of 70 to 90 °C.

5. Process as claimed in any of claims 1 to 4, wherein the sodium hydroxide solution is introduced at a temperature of 80 to 100 °C.

6. Process as claimed in any of claims 1 to 5, wherein the sodium hydroxide solution is added along a path of 2 to 4 % the length of the reaction zone.

## Revendications

1. Procédé de préparation d'un phosphate de fourrage granulé constitué par les phosphates de sodium, de magnésium et de calcium par introduction d'acide phosphorique, de dolomie et de lessive de soude dans une zone de réaction allongée, dans lequel on introduit la dolomie d'une granulométrie inférieure à 0,1 mm et l'acide phosphorique en tête de la zone de réaction et on ajoute la lessive de soude à ce mélange dolomie-acide phosphorique en un point que le mélange atteint après 0,5-3 min, on fait passer la dolomie, l'acide phosphorique et la lessive de soude à travers la zone de réaction et on fait réagir avec brassage continu, caractérisé en ce que :

a) l'acide phosphorique présente une concentration de 50-70 % en poids de $P_2O_5$ et la lessive de soude présente une concentration de 50-80 % en poids de NaOH,

b) on introduit dans la zone de réaction l'acide phosphorique à une température de 50-120 °C et la lessive de soude à une température de 60-140 °C,

c) on ajoute la lessive de soude au mélange dolomie-acide phosphorique sur un trajet égal à 5 % au plus de la longueur de la zone de réaction et

d) on soutire par tamisage des granulés d'une granulométrie de 0,5-2,5 mm.

2. Procédé selon la revendication 1, caractérisé en ce que l'acide phosphorique contient jusqu'à 60 % en poids de $P_2O_5$.

3. Procédé selon la revendication 1 ou 2, caractérisé en ce que la lessive de soude présente une concentration de 55-75 % en poids de NaOH.

4. Procédé selon l'une des revendications 1-3, caractérisé en ce que l'on introduit l'acide phosphorique à une température de 70-90 °C.

5. Procédé selon l'une des revendications 1-4, caractérisé en ce que l'on introduit la lessive de soude à une température de 80-100 °C.

6. Procédé selon l'une des revendications 1-5, caractérisé en ce que l'on ajoute la lessive de soude sur un trajet égal à 2-4 % de la longueur de la zone de réaction.